# EUROPÄISCHE PATENTANMELDUNG

(11) **EP 3 985 222 A1**
(43) Veröffentlichungstag der Anmeldung: **20.04.2022**
(21) Anmeldenummer: 20202027.7
(22) Anmeldetag: 15.10.2020
(51) Int. Cl.: E21B 43/12, E21B 47/009, G06N 5/00

(54) **COMPUTER-IMPLEMENTIERTES VERFAHREN ZUR BESTIMMUNG EINER BETRIEBSEIGENSCHAFT EINER GESTÄNGE-TIEFPUMPE, ANALYSEVORRICHTUNG UND PUMPSYSTEM HIERFÜR**

(71) Anmelder: Siemens Energy Global GmbH & Co. KG, 81739 München (DE)
(72) Erfinder: Die Erfindernennung liegt noch nicht vor

(57) **Zusammenfassung**

Computer-implementiertes Verfahren zur Bestimmung einer Betriebseigenschaft einer Gestänge-Tiefpumpe (1), wobei die Pumpe (1) einen Pump-Kopf (110, 111) aufweist, welcher über ein Gestänge (5, 10) mit einem Kinematik-Wandler (120) verbunden ist, und der Kinematik-Wandler (120) im Betrieb von einem Motor (3) angetrieben wird und ein Last-Weg-Diagramm mit Kurvenpunkten für die Pumpe (1) mithilfe eines Erfassungsmittels (130) von einer Analysevorrichtung (140) ermittelt und als Betriebs-Last-Weg-Diagramm (DC1-DC5) mit Betriebs-Kurvenpunkten bereitgestellt wird, wobei von der Analysevorrichtung (140) in einem Trainings-Modus zumindest ein Modell-Last-Weg-Diagramm mit jeweiligen Modell-Kurvenpunkten bereitgestellt wird, welches auf eine vordefinierte Bezugsgröße normiert wird, und zumindest zwei Teilmengen der Modell-Kurvenpunkte auf Basis maschinellen Lernens als ein erstes und zumindest ein zweites Merkmal erfasst werden, und das erste und das zumindest eine zweite Merkmal in Form zumindest eines Random-Forest-Modells mit einem Kmeans-Algorithmus erzeugt und trainiert wird, und in einem Betriebs-Modus die Betriebs-Kurvenpunkte auf die Bezugsgröße normiert werden und geprüft wird, ob eine Ähnlichkeit zumindest einer Teilmenge der Betriebs-Kurvenpunkte zu dem zumindest einen Random-Forest-Modell vorliegt, und falls zutreffend, die Betriebseigenschaft der Pumpe (1) daraus bestimmt wird.

## Beschreibung

Die Erfindung betrifft ein computer-implementiertes Verfahren zur Bestimmung einer Betriebseigenschaft einer Gestänge-Tiefpumpe, wobei die Pumpe einen Pump-Kopf aufweist, welcher über ein Gestänge mit einem Kinematik-Wandler verbunden ist, und der Kinematik-Wandler im Betrieb von einem Motor angetrieben wird und ein Last-Weg-Diagramm mit Kurvenpunkten für die Förder-Pumpe mithilfe eines Erfassungsmittels von einer Analysevorrichtung ermittelt und als Betriebs-Last-Weg-Diagramm mit Betriebs-Kurvenpunkten bereitgestellt wird.

Ferner betrifft die Erfindung ein Computerprogramm, einen elektronisch lesbaren Datenträger und ein Datenträgersignal.

Außerdem betrifft die Erfindung eine Analysevorrichtung mit einem Speicher und ein Pumpsystem zur Bestimmung einer Betriebseigenschaft einer Gestänge-Tiefpumpe.

Tiefpumpen oder Förderpumpen werden als Fördereinrichtungen zur Gewinnung von unterirdisch lagernden Flüssigkeiten eingesetzt, wenn der Lagerstättendruck nicht ausreicht, dass sie selbständig bzw. in ausreichender Menge an die Oberfläche gelangen. Zumeist wird mit ihnen Erdöl gefördert. Weitere Einsatzgebiete sind die Förderung von Sole und Heilwässern.

Das Bild der meisten Ölfelder wird von Gestänge-Tiefpumpen geprägt, die wegen ihres Aussehens und ihrer Bewegung auch Pferdekopfpumpen, Nickesel oder Nicker genannt werden. Dabei befindet sich der eigentliche Pumpmechanismus - ein Kolben mit Rückschlagventilen - in einem eigenen Rohrstrang im Bohrloch nahe der ölführenden Schicht. Der Kolben wird mittels einer verschraubbaren Stange von einem an der Erdoberfläche befindlichen Pumpenbock in eine kontinuierliche Auf- und Abbewegung versetzt. Dies wird durch den sogenannten Pferdekopf bewerkstelligt. Dieser besteht aus einem am Ende eines als Balancier angeordneten Kreisbogensegments, an dem ein Stahlseil- oder Kettenpaar oben angeklemmt ist.

Der Antrieb erfolgt zumeist elektrisch. Beim Vorhandensein von ausreichend im Erdöl gelösten energiehaltigen Gasen kann jedoch ein Teil dieser Gase an Ort und Stelle mittels eines Degasers vom Fördergut abgetrennt und einem Gasmotor, der die Pumpe antreibt, zugeführt werden.

Je nach Pumpenbauart und -größe beträgt der Arbeitshub 1 bis 5 m. Pro Minute sind zweieinhalb bis zwölf Hübe üblich. Die Gestänge-Tiefpumpe kann bis zu Fördertiefen von etwa 2500 m wirtschaftlich eingesetzt werden. Für größere Tiefen sind aufgrund des großen Gewichts der zu hebenden Flüssigkeitssäule andere Pumpensysteme besser geeignet.

Der Pumpentyp "Mark II" des texanischen Herstellers Lufkin Industries eignet sich durch seine spezielle Bewegungsgeometrie besonders für hohe Förderraten aus großen Tiefen.

Der Pumpentyp "Sucker Rod" weist eine Saugstange auf, das heißt eine Stahlstange mit einer typischen Länge zwischen 25 und 30 Fuß und einem Gewinde an beiden Enden, die in der Ölindustrie verwendet wird, um die Oberflächen- und Bohrlochkomponenten einer in einer Ölquelle installierten Hubkolbenpumpe miteinander zu verbinden.

Ein äußerst wertvolles Instrument zur Analyse der Bohrlochleistung ist ein Bohrlochprüfstand, welcher die Belastung der polierten Stange im Verhältnis zur Position der polierten Stange misst.

Mit Dynamometern können Stangenposition und Stangenlast über der Zeit aufgezeichnet werden. Der lastmessende Teil des Dynamometers ist an der polierten Stange angebracht, damit die Last erfasst und an einen Rekorder gesendet werden kann. Ein Begleitteil des am Hubbalken angebrachten Leistungsprüfstands erfasst die Position der polierten Stange und sendet sie an denselben Rekorder. Die erzeugte Grafik wird als Dynagraph oder häufiger als Dynamometer oder Dynagraph-Karte bezeichnet und entspricht einem Last-Weg-Diagramm.

An der Oberfläche entnommene Dynamometerkarten können selten direkt zur Erfassung der Betriebsbedingungen der Bohrlochpumpe verwendet werden, da sie auch alle Kräfte (statisch und dynamisch) widerspiegeln, die von der Pumpe bis zum Bohrlochkopf auftreten. Befindet sich jedoch ein Dynamometer direkt über der Pumpe, ist die aufgezeichnete Karte ein echter Indikator für den Pumpenbetrieb. Dies gelang Gilberts Dynagraph (ein mechanisches Dynamometer) in den 1930er Jahren. Stablasten unmittelbar über der Pumpe, die als Funktion der Pumpenposition aufgezeichnet werden, geben Dynagraph-Karten einen Namen, mit dem sie von Oberflächenkarten unterschieden werden. Obwohl die Anwendung von Gilberts Dynagraph eine direkte Untersuchung von Pumpproblemen ermöglichte, hatten die praktischen Auswirkungen, die mit der Notwendigkeit verbunden waren, das Instrument im Bohrloch laufen zu lassen, seine Vorteile bei weitem überwogen.

Bisher werden zur Erfassung der Betriebsbedingungen einer Gestänge-Tiefpumpe Sensoren eingesetzt, welche die wirkenden Kräfte beziehungsweise die aktuelle Lage (Inklination) des Laufbalkens (englisch "beam" bzw. "cranck arm") erfassen, beispielsweise durch Kraft-Sensoren, Hall-Sensoren oder Näherungssensoren. Daraus wird die Position des Gestänges berechnet. Dabei ist es jedoch aufwändig, die jeweiligen Sensoren miteinander zu kalibrieren. Außerdem können durch eine ungenaue Kalibrierung Fehler entstehen, welche die Messdatenauswertung ungünstig beeinflussen können.

Es ist Aufgabe der Erfindung ein Verfahren und eine Vorrichtung zur Bestimmung von Betriebseigenschaften einer Gestänge-Tiefpumpe bereitzustellen, wobei die Bestimmung der Betriebsbedingungen auf eine einfache und zuverlässige Weise, sowie mit hoher Genauigkeit erfolgt, sodass eine umfassende Diagnose eines Betriebszustands erfolgen kann.
Die erfindungsgemäße Aufgabe wird durch ein Verfahren eingangs genannter Art gelöst, wobei von der Analysevorrichtung in einem Trainings-Modus zumindest ein Modell-Last-Weg-Diagramm mit jeweiligen Modell-Kurvenpunkten bereitgestellt wird, welches auf eine vordefinierte Bezugsgröße normiert wird, und zumindest zwei Teilmengen der Modell-Kurvenpunkte auf Basis maschinellen Lernens als ein erstes und zumindest ein zweites Merkmal erfasst werden, und das erste und das zumindest eine zweite Merkmal in Form zumindest eines Random-Forest-Modells mit einem Kmeans-Algorithmus erzeugt und trainiert wird, und in einem Betriebs-Modus die Betriebs-Kurvenpunkte auf die Bezugsgröße normiert werden und geprüft wird, ob eine Ähnlichkeit zumindest einer Teilmenge der Betriebs-Kurvenpunkte zu dem zumindest einen Random-Forest-Modell vorliegt, und falls zutreffend, die Betriebseigenschaft der Pumpe daraus bestimmt wird.

Dadurch wird erreicht, dass ein oder mehrere Modell-Last-Weg-Diagramme von anderen Pumpen verwendet werden können und beispielsweise eine neu in Betrieb genommene Pumpe sofort, also ohne vorheriges Training mit eigenen Betriebs-Last-Weg-Diagrammen, angewendet werden kann.

Ferner kann auf besonders einfache Weise eine Erkennung von Merkmalen erreicht werden, die einen Schluss auf ein Betriebseigenschaft der Pumpe erlauben.

Bei der Normierung kann eine elliptische FourierTransformation eingesetzt werden.

Abweichungen des Betriebs-Last-Weg-Diagramms vom Last-Weg-Diagramm-Modell, das heißt vom Trainings-Modell, können beispielsweise als unerwünschte Betriebseigenschaft der Pumpe selbst erkannt werden.

Ebenso kann ein aktuell erfasstes Pumpmedium, welches von der Pumpe gefördert wird, erkannt werden, indem mit einem entsprechenden Trainings-Modell verglichen wird, das eben dieses Medium beschreibt.

Folglich kann sowohl der Betrieb der Pumpe mit ihren Komponenten als auch das geförderte Pumpmedium effizient und zuverlässig analysiert werden.

Das Pumpmedium ist meist ein Gemisch aus Gas, Sand/ Gesteinspartikel, Wasser, Öl und teilweise auch chemischen Additiven.

Dadurch wird erreicht, dass die Betriebsbedingungen der Pumpe auf eine einfache und zuverlässige Weise erfolgen kann, indem unter Verwendung von maschinellem Lernen ein Pumpen-Modell verwendet werden kann, welches Erfahrungswerte und Prognosen anderer Pumpen in der Analyse einbezieht.

Dadurch kann die Genauigkeit bei der Bestimmung und eine Diagnose eines Betriebszustands verbessert werden.

Durch die Normierung des Last-Weg-Diagramm-Modells, welches durch ein entsprechendes Diagramm beschrieben werden kann, und des Betriebs-Last-Weg-Diagramm, kann der gegenseitige Vergleich einfach und akkurat durchgeführt werden.

Bei der Normierung wird eine Achs-Anpassung im Last-Weg-Diagramm durchgeführt, wie dem Fachmann geläufig, sodass ein Vergleich der Kurvenform direkt möglich ist.

Dadurch ist es möglich, Daten anderer Pumpen und andere Pump-Typen im Last-Weg-Diagramm-Modell zu berücksichtigen und somit sehr rasch nach einer Inbetriebnahme einer neuen Pumpe ein entsprechendes Last-Weg-Diagramm-Modell verfügbar ist.

Durch Bildung eines "sub-surface dynacharts", also eines Betriebs-Last-Weg-Diagramms für den unterirdisch arbeitenden Pump-Kopf ist es möglich, die Abhängigkeit des verwendeten Pump-Typs, also unterschiedlicher Pumpen-Bauart gegenüber dem im vorher angeführten angewandten Verfahren zu eliminieren.

Dies kann beispielsweise durch Anwendung einer Finite Elemente-Rechnung und einer FFT auf ein "surface dynachart", also eines Betriebs-Last-Weg-Diagramms des gesamten Pumpsystems erfolgen.

Dadurch kann ein langwieriges Trainieren des Last-Weg-Diagramm-Modells vor Ort reduziert werden oder auch gänzlich darauf verzichtet werden.

Es ist vorteilhaft, wenn nach einer Ähnlichkeitsprüfung mittels eines oder mehrerer Kmeans-Entscheidungsbäume eine zusätzliche Prüfung durch eine nachfolgende Feststellung, ob eine durch die Betriebs-Kurvenpunkte gebildete Kurve einen oder mehrere, mithilfe von maschinellem Lernen erzeugte Referenzpunkte einschließt, durchgeführt wird. Dies ist im angeschlossenen Ausführungsbeispiel näher dargestellt. Dadurch kann die Erkennung von Betriebseigenschaften besonders zielsicher erfolgen.

In einer Weiterbildung der Erfindung ist es vorgesehen, dass zumindest zwei Random-Forest-Modelle gebildet werden, welche zueinander eine niedrige Korrelation aufweisen.

Dadurch wird erreicht, dass Merkmale unabhängig voneinander erkannt werden, was die Erkennungswahrscheinlichkeit bei der Bestimmung der Betriebseigenschaft der Pumpe erhöht.

In einer Weiterbildung der Erfindung ist es vorgesehen, dass die zumindest zwei Random-Forest-Modelle mit niedriger Korrelation dadurch erzeugt werden, dass jeweils ein Punkt aus der Menge der Betriebs-Kurvenpunkte zufällig ausgewählt wird und mit Ersetzen aus der Menge der Betriebs-Kurvenpunkte erfolgt.

Dies ist vorteilhaft, da die Merkmale zuverlässig erkannt werden, was die Erkennungswahrscheinlichkeit bei der Bestimmung der Betriebseigenschaft der Pumpe erhöht.

In einer Weiterbildung der Erfindung ist es vorgesehen, dass die zumindest zwei Random-Forest-Modelle mit niedriger Korrelation dadurch erzeugt werden, dass eine Teilmenge beim Auftrennen eines Knotens in einem Random-Forest-Modell weiter berücksichtigt wird.

Dies ist vorteilhaft, da die Merkmale zuverlässig erkannt werden, was die Erkennungswahrscheinlichkeit bei der Bestimmung der Betriebseigenschaft der Pumpe erhöht.

In einer Weiterbildung der Erfindung ist es vorgesehen, dass eine Abfolge des ersten und des zumindest einen zweiten Merkmals innerhalb eines Pumpzyklus im Betrieb der Pumpe im jeweiligen Random-Forest-Modell bei der Bestimmung der Betriebseigenschaft der Pumpe berücksichtigt wird.

Dies ist vorteilhaft, da eine Merkmals-Abfolge innerhalb eines Kurvenverlaufs, also während eines Förder-Zyklus der Pumpe, die Erkennungswahrscheinlichkeit bei der Bestimmung der Betriebseigenschaft der Pumpe weiter erhöht.

In einer Weiterbildung der Erfindung ist es vorgesehen, dass das erste oder das zumindest eine zweite Merkmal einen Abstand von Betriebs-Kurvenpunkten im Betriebs-Last-Weg-Diagramm (DC1-DC5) umfasst.

Der Abstand zwischen Betriebs-Kurvenpunkten repräsentiert die lokale Geschwindigkeit und die Beschleunigung der Pumpe.

Als weiteres Kriterium neben der lokalen Geschwindigkeit kann auch die lokale Beschleunigung an einem jeweiligen Betriebs-Kurvenpunkt herangezogen werden, was mathematisch durch die erste beziehungsweise durch die zweite Ableitung der Kurvenfunktion für die beiden Achsen der Kurve beschrieben werden kann.

Dadurch kann die Erkennungswahrscheinlichkeit bei der Bestimmung der Betriebseigenschaft der Pumpe erhöht werden.

In einer Weiterbildung der Erfindung ist es vorgesehen, dass der Motor elektrisch betrieben wird und ferner ein Erfassungsmittel vorgesehen ist, die Leistungsaufnahme des Motors während dessen Betrieb zu erfassen, aus welcher die Betriebseigenschaften der Förder-Pumpe bestimmt werden.

Dadurch kann die Erfassung des Last-Weg-Diagramms vereinfacht werden, gleichzeitig die Genauigkeit bei der Bestimmung der Kurvenpunkte erhöht und durch die Kombination mit dem genannten Analyse-Verfahren insgesamt die Genauigkeit bei der Bestimmung der Betriebseigenschaft weiter verbessert werden.

In einer Weiterbildung der Erfindung ist es vorgesehen, dass die Mess-Kurvenpunkte und die Modell-Kurvenpunkte zwischen zwei benachbarten Punkten auf den jeweiligen Kurven jeweils Abstände aufweisen, welche durchschnittlich zumindest 50%, bevorzugt zumindest 80% und besonders bevorzugt zumindest 95% des größten Abstands zwischen zwei benachbarten Punkten der jeweiligen Kurve beträgt.

Mit anderen Worten ist es vorteilhaft, wenn die Mehrheit der Punkte äquidistant zu den jeweiligen benachbarten, also unmittelbar in deren Abfolge nacheinander folgenden Kurven-Punkten ist.

Als äquidistante Abstände der Kurven-Punkte können Abstandsabweichungen von bis zu 20% eines jeweiligen Abstands zwischen zwei nacheinander folgenden Punkten angesehen werden.

Die Abfolge der Kurven-Punkte ergibt sich beispielsweise bei deren Erfassung.

Dadurch können Singularitäten von Kurven-Punkten für das Last-Weg-Diagramm reduziert werden, wodurch der Referenzpunkt stabiler und genauer bestimmt werden kann und die Genauigkeit bei der Bestimmung der Betriebseigenschaft weiter verbessert werden kann.

Die erfindungsgemäße Aufgabe wird durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird durch ein Datenträgersignal gelöst, welches das erfindungsgemäße Computerprogramm überträgt.

Die erfindungsgemäße Aufgabe wird auch durch eine Analysevorrichtung mit einem Speicher eingangs genannter Art gelöst, welche dazu eingerichtet ist, ein bereitgestelltes Betriebs-Last-Weg-Diagramm mit dem erfindungsgemäßen Verfahren zu analysieren, und daraus die Betriebseigenschaft zu ermitteln.

Die Analysevorrichtung weist zwei Betriebsmodi auf, nämlich einen Trainings-Modus und einen Betriebs-Modus.

Der Trainings-Modus dient zum Erzeugen und Trainieren eines Last-Weg-Diagramm-Modells der Pumpe, wobei für mehrere Betriebsmodi der Pumpe eigene Last-Weg-Diagramm-Modelle trainiert werden können, um diese Modi dementsprechend zu erkennen.

Der Trainings-Modus wird zu Beginn des Betriebs des Pumpsystems durchlaufen, um ein oder mehrere Last-Weg-Diagramm-Modelle auf Basis von "machine learning" (ML) für den nachfolgenden Betriebs-Modus verfügbar zu machen, in welchem der laufende Betrieb des Pumpsystems durch die Analysevorrichtung fortlaufend überwacht werden kann.

Der Betriebs-Modus dient dazu, einen aktuell erfassten Datensatz in Form von durch ein Erfassungsmittel erfassten MessPunkten beispielsweise mit einem ausgewählten Last-Weg-Diagramm-Modell zu vergleichen und bei Übereinstimmung mit dem Last-Weg-Diagramm-Modell diesem Modell zugeordneten Betriebsmodus zu erkennen.

Ferner kann eine Änderung in der erkannten Betriebseigenschaft Hinweis auf einen weiteren Parameter für die Betriebseigenschaft geben.

So kann beispielsweise eine Abfolge in der Änderung erkannter Betriebsmedien Aufschluss darüber geben, ob eine Material-Inhomogenität im Medium vorliegt.

Es könnte zu m Beispiel auch erkannt werden, ob ein Gebrechen in Komponenten der Pumpe vorliegt, wenn ein geändertes Bewegungsmuster des Pumpkopfs nur in Aufwärts-Bewegungen erkannt wurde.

Die erfindungsgemäße Aufgabe wird auch durch ein Pumpsystem eingangs genannter Art gelöst, wobei die Pumpe einen Pump-Kopf aufweist, welcher über ein Gestänge mit einem Kinematik-Wandler verbunden ist, und der Kinematik-Wandler im Betrieb von einem Motor angetrieben wird, und ein Erfassungsmittel, welches dazu eingerichtet ist, ein Last-Weg-Diagramm der Pumpe mit Kurvenpunkten zu erfassen und bereitzustellen, sowie die erfindungsgemäße Analysevorrichtung mit einem Speicher, welche dazu eingerichtet ist, aus dem bereitgestellten Betriebs-Last-Weg-Diagramm die Betriebseigenschaft zu ermitteln.

Die Erfindung wird nachfolgend anhand eines in den beigeschlossenen Zeichnungen dargestellten Ausführungsbeispiels näher erläutert. In den Zeichnungen zeigt
- Fig. 1: ein Ausführungsbeispiel eines erfindungsgemäßen Systems mit einer Gestänge-Tiefpumpe,
- Fig. 2: ein Ausführungsbeispiel für einen Pump-Kopf einer Gestänge-Tiefpumpe,
- Fig. 3: ein Ausführungsbeispiel für ein Flussdiagramm eines Verfahrens zur Bestimmung eines Last-Weg-Diagramms aus der Leistungsaufnahme eines elektrisch betriebenen Pumpenmotors,
- Fig. 4: ein erstes Ausführungsbeispiel für ein Last-Weg-Diagramm,
- Fig. 5: Last-Weg-Diagramme für eine Pumpe bei verschiedenen Leistungen,
- Fig. 6: Last-Weg-Diagramme für eine Pumpe bei verschiedenen Lasten und Betriebsmodi,
- Fig. 7: eine zeitliche Darstellung eines Stromverlaufs eines elektrischen Antriebsmotors für eine Gestänge-Tiefpumpe,
- Fig. 8-12: Beispiele für Betriebs-Last-Weg-Diagramme mit Kurvenpunkten.

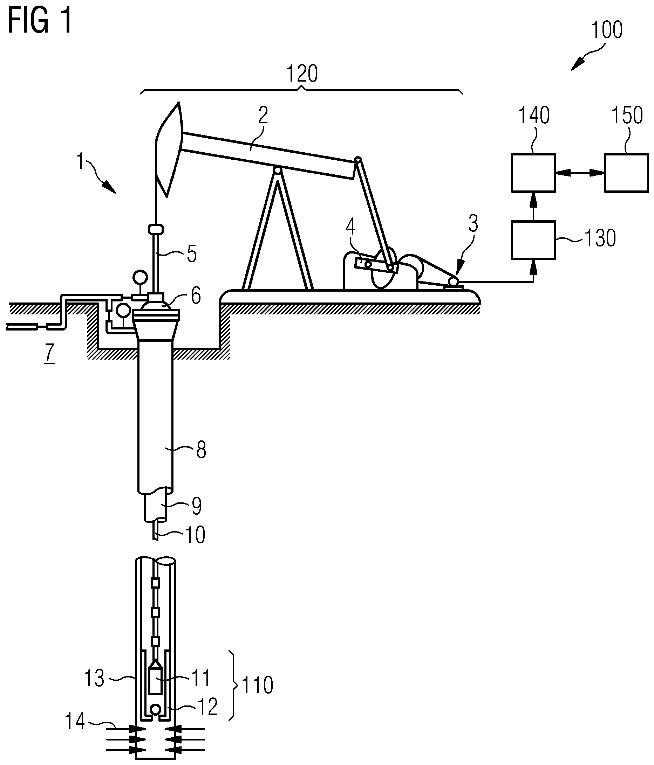

Fig. 1 zeigt ein Ausführungsbeispiel eines erfindungsgemäßen Pumpsystems 100 mit einer Gestänge-Tiefpumpe 1 vom Typ einer Sucker-Rod-Pumpe.

Das Pumpsystem 100 umfasst einen Pump-Kopf 110, welcher über ein Gestänge 5, 10 mit einem Kinematik-Wandler 120 verbunden ist.

Das Gestänge 5, 10 bildet eine sogenannte "Stabschnur" und verläuft durch einen Bohrlochkopf 6, mit welchen eine Durchflussleitung 7 zur Ableitung eines geförderten Mediums 14 verbunden ist.

An den Bohrlochkopf 6 grenzt ein Mantel 8 an, in welchem eine Röhre 9 verläuft, die das Gestänge 5 bzw. 10 führt.

Am unteren Ende des Gestänges 10 ist der Pump-Kopf 110 befestigt, der einen Kolben 11 in einem Lauf 12 beinhaltet. Eine Bewegung des Kolbens 11 führt zu einem Abpumpen des Fördermediums 14.

Der Mantel 8 ist in einem Bohrloch 13 gebildet.

Der Kinematik-Wandler 120 wird beispielsweise von einer Antriebsmaschine in Form eines elektrischen Motors 3 über ein Untersetzungsgetriebe 4 angetrieben. Der Kinematik-Wandler 120 kann zusätzlich einen hydraulischen Kraftverstärker umfassen.

Die mechanische Anbindung des Kinematik-Wandler 120 erfolgt in diesem Beispiel über einen Laufbalken 2, kann je nach verwendetem Pumpentyp aber variieren.

Dem Fachmann sind derartige Kinematik-Wandler geläufig, ebenso deren Beschreibung in Form von "Eigenschaften eines Kinematik-Wandlers" durch die Transformations-Funktion von mechanischen Bewegungen und Kräften.

Der Kinematik-Wandler 120 konvertiert eine Drehbewegung des Motors 3 in eine Linearbewegung des Gestänges 5, 10.

Die Eigenschaften des Kinematik-Wandler 120 können beispielsweise über Hebelwirkungen und Übersetzungen, sowie über die elektrische Antriebsleistung und bewegte Massen beschrieben werden. Dabei ist zu beachten, dass die Position einer Schwungmasse entlang einer Drehbewegung und die korrespondierende Krafteinwirkung am Gestänge 10 in einem zeitlichen Zusammenhang steht, welche als Bezugsphasenwinkel bezeichnet wird. Für eine jeweilige Pumpenanordnung kann ein Bezugsphasenwinkel unter Anwendung der Kinematik-Prinzipien der Mechanik bestimmt werden, wie dem Fachmann bekannt.

Ferner ist ein Erfassungsmittel 110 vorgesehen, das dazu eingerichtet ist, die Stromaufnahme und die Betriebsspannung der einzelnen Phasen des Motors 3 während dessen Betrieb zu erfassen. Dies kann beispielsweise durch ein Amperemeter beziehungsweise Voltmeter erfolgen, welches insbesondere zeitlich hochauflösend diskrete Messpunkte mit Strom- beziehungsweise Spannungswerten erfasst.

Durch die erfassten Strom- und Betriebsspannungswerte kann die effektive Leistungsaufnahme und die Schein-Leistungsaufnahme bestimmt werden.

Ferner ist eine Analyse- beziehungsweise Rechenvorrichtung 140 mit einem Speicher 150 vorgesehen, welche dazu eingerichtet ist, das erfindungsgemäße Verfahren mithilfe des Erfassungsmittels 130 auszuführen.

Es ist dem Fachmann bekannt, wie ein Bezugsphasenwinkel für den Kinematik-Wandler 120 mithilfe der Eigenschaften des Kinematik-Wandlers 120 und der Leistungsaufnahme 72 des Motors 3, welcher den Zusammenhang zwischen dem Maximum 83 der Leistungsaufnahme 72 und dem Maximum der auf das Gestänge der Tiefpumpe 1 wirkenden Kraft beschreibt, ermittelt werden kann.

Es ist dem Fachmann auch bekannt, wie ein Drehmoment-Verlauf aus der Leistungsaufnahme 72 des Motors 3 mithilfe der Eigenschaften des Kinematik-Wandlers 120 ermittelt werden kann.

Das Erfassungsmittel 130 ist dazu eingerichtet, ein Betriebs-Last-Weg-Diagramm der Pumpe 1 mit Kurvenpunkten zu erfassen und der Rechen- beziehungsweise Analysevorrichtung 140 mit dem Speicher 150 bereitzustellen.

Die Analysevorrichtung 140 ist dazu eingerichtet, das bereitgestellte Betriebs-Last-Weg-Diagramm mit dem erfindungsgemäßen Verfahren zu analysieren, und daraus die Betriebseigenschaft zu ermitteln.

Das erfindungsgemäße Verfahren kann als Computerprogramm implementiert werden, das Befehle umfasst, welche bei deren Ausführung durch einen Computer 140 diesen veranlassen, das erfindungsgemäße Verfahren auszuführen.

Ferner kann das erfindungsgemäße Verfahren als elektronisch lesbarer Datenträger mit darauf gespeicherten lesbaren Steuerinformationen verfügbar sein, welche zumindest das erfindungsgemäße Computerprogramm umfassen und derart ausgestaltet sind, dass sie bei Verwendung des Datenträgers in einer Recheneinrichtung 140 das erfindungsgemäße Verfahren durchführen.

Das erfindungsgemäße Verfahren kann auch als Datenträgersignal verfügbar sein, das das erfindungsgemäße Computerprogramm überträgt.

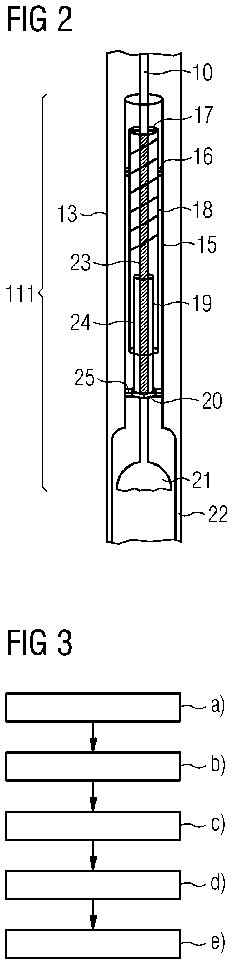

Fig. 2 zeigt ein weiteres, detaillierteres Beispiel für einen Pump-Kopf 111 nach dem Stand der Technik.

Die Stabschnur bzw. das Gestänge 10 wird entsprechend der Fig. 1 angetrieben und in eine Auf- und Ab-Linearbewegung versetzt.

In der gezeigten Variante des Pumpkopfs 111 ist im Bohrloch 13 eine Deckröhre 15 mit vertikalen Rillen angeordnet, welche innerhalb der Deckröhre 15 über eine Haltevorrichtung 16 und ein selbstausrichtendes Lager 17 eine drehende Röhre 18 mit Spiralrillen führt.

Eine Aufnahmeröhre 19 ist über eine Flügelmutter 20 mit einer Kolbenanordnung 21 verbunden, welche in einer Pumpenauskleidung 22 gelegen ist.

Eine kalibrierte Stange 23 ist über einen Stift 24 und eine Haltevorrichtung 25 mit dem Gestänge 10 verbunden, welche die Kolbenanordnung durch die Linearbewegung antreibt.

Fig. 3 zeigt ein Ausführungsbeispiel für ein Flussdiagramm eines Verfahrens zur Bestimmung eines Last-Weg-Diagramms aus der Leistungsaufnahme eines elektrisch betriebenen Pumpenmotors mit folgenden Schritten:
a) Erfassen der Stromaufnahme und der Betriebsspannung des Motors 3 mit einer Abtastfrequenz über zumindest einen Pumpzyklus, welcher jeweils vier Betriebsphasen der Tiefpumpe 1 zugeordnet werden kann, in Form von diskreten Messpunkten mit Stromwerten, und daraus Bestimmen der Leistungsaufnahme 72 des Motors 3 mit Leistungswerten,
b) Bestimmen für einen Pumpzyklus einer Periodendauer 85 und eines Maximums 82 der Leistungsaufnahme 72, welches dem Drehmoment-Maximum der Tiefpumpe 1 entspricht,
c) Bestimmen eines Bezugsphasenwinkels für den Kinematik-Wandler 120 mithilfe der Eigenschaften des Kinematik-Wandlers 120 und der Leistungsaufnahme des Motors 3, welcher den Zusammenhang zwischen dem Maximum 82 der Leistungsaufnahme und dem Maximum der auf das Gestänge der Tiefpumpe 1 wirkenden Kraft beschreibt,
d) Ermitteln eines Drehmoment-Verlaufs aus der Leistungsaufnahme des Motors 3 mithilfe der Eigenschaften des Kinematik-Wandlers 120,
e) Bestimmen der Betriebseigenschaften der Förder-Pumpe 1 aus dem im Schritt d) ermittelten Drehmoment-Verlauf unter Verwendung der im Schritt b) bestimmten Periodendauer und dem im Schritt c) bestimmten Bezugsphasenwinkel.

Die Leistungswerte können durch das Produkt von den diskreten Stromwerten und der Betriebsspannung bestimmt werden.

Die Periodendauer 85 kann beispielsweise mithilfe eines approximierten Polynoms 80 durch die Leistungswerte der Messpunkte ermittelt werden.

Die Periodendauer 85 kann beispielsweise aber auch mithilfe eines Polynoms 80 ermittelt werden, welches für Stützpunkte des Polynoms statistische Mittelwerte der Leistungswerte der jeweiligen Messpunkte über zumindest fünf, bevorzugt zumindest zehn, besonders bevorzugt zumindest fünfzig Pumpzyklen berücksichtigt.

Für die Messpunkte kann ein Referenzwert 81 ermittelt werden, bei welchem für die Änderung des jeweiligen Leistungswerts zwischen zwei unmittelbar aufeinander folgenden Messpunkten ein Maximum vorliegt, und die Periodendauer 85 mithilfe des Referenzwerts 81 ermittelt wird.

Das Bestimmen der Betriebseigenschaften der Förder-Pumpe 1 kann mithilfe eines Last-Weg-Diagramms 30, 50, 54, 57, 60-65 erfolgen, welches aus dem im Schritt d) ermittelten Drehmoment-Verlauf unter Verwendung der im Schritt b) bestimmten Periodendauer und dem im Schritt c) bestimmten Bezugsphasenwinkel ermittelt wird.

Der Bezugsphasenwinkel kann bezüglich des absoluten Maximums der Leistungswerte der Messpunkte innerhalb eines Pumpzyklus bestimmt werden.

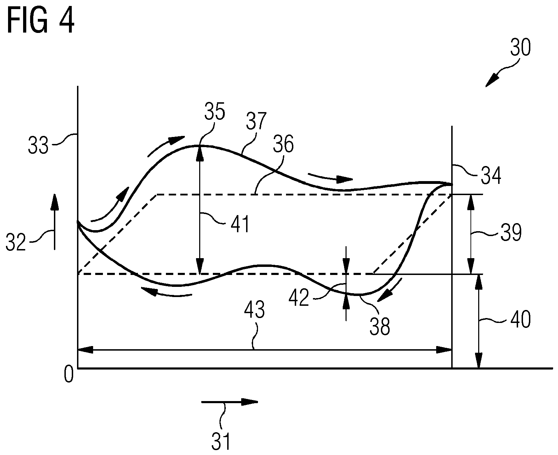

Fig. 4 bis Fig. 6 zeigen Beispiele für Last-Weg-Diagramme, welche häufig dazu verwendet werden, um die Betriebseigenschaften von Gestänge-Tiefpumpen zu bestimmen.

In Fig. 4 ist ein Last-Weg-Diagramm 30 dargestellt.

Auf der x-Achse ist die Position 31 der polierten Stange aufgetragen, und auf der y-Achse die Last 32 der polierten Stange.

Es ist ein tiefster Punkt des Pumpenhubs 33 und ein höchster Punkt des Pumpenhubs 34 erkennbar.

Ferner ist eine Spitze der polierten Stange 35 (PPRI) dargestellt.

Strichliert ist eine Karte 36 der polierten Stange für Pumpgeschwindigkeit gleich Null eingezeichnet.

Ferner ist ein Karte 37 der polierten Stange für Pumpgeschwindigkeit größer als Null.

Es ist eine minimale Last der polierten Stange 38 (MPRL) dargestellt.

Es kann auch eine Bruttokolbenlast 39 abgelesen werden.

Außerdem kann ein Gewicht der Stangen im Fluid 40 bestimmt werden, sowie Kräfte 41 und 42, und ein Pump-Hub bzw. Pump-Weg 43.

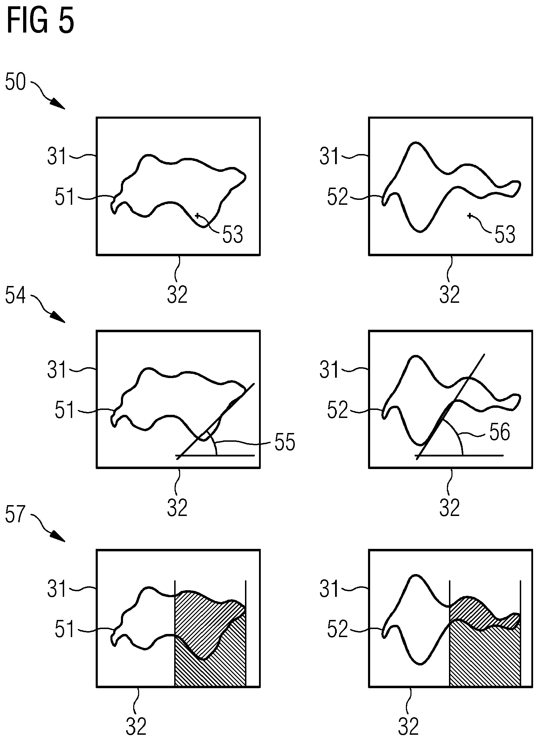

In Fig. 5 sind Last-Weg-Diagramme 50 mit Stangenlast bei Sollwert als Funktion der Last 32 der polierten Stange über die jeweilige Position 31 der polierten Stange gezeigt.

Ein Last-Weg-Diagramm 51 zeigt den Betrieb bei voller PumpenLeistung.

Ein Last-Weg-Diagramm 52 zeigt den Betrieb bei leergepumpten Fördermedium.

Ein jeweiliger Sollwert 53 ist erkennbar.

Ferner sind Last-Weg-Diagramme 54 mit Stangenlast bei einem Betriebswechsel als Funktion der Last 32 der polierten Stange über die jeweilige Position 31 der polierten Stange gezeigt, wobei jeweilige Winkel 55, 56 ablesbar sind.

Ferner sind Last-Weg-Diagramme 57 mit Stangenlast mit der jeweiligen mechanischen Arbeit der Stangen dargestellt.

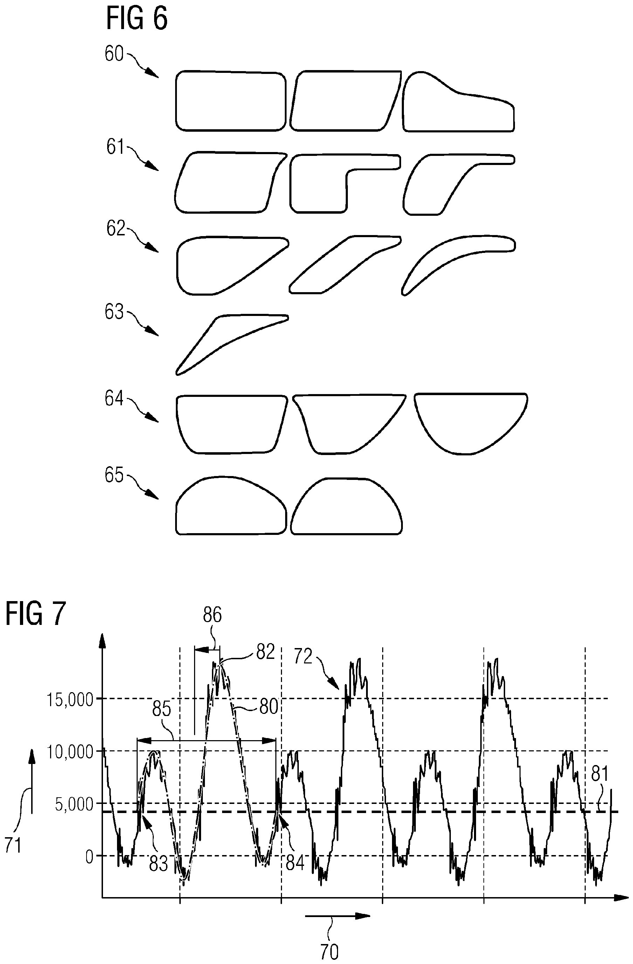

In Fig. 6 sind Last-Weg-Diagramme 60-65 für verschiedene Betriebszustände dargestellt.

Diagramm 60 zeigt Last-Weg-Diagramme bei einem normalen Betrieb.

Diagramm 61 zeigt Last-Weg-Diagramme bei einem Fluid-Lager.

Diagramm 62 zeigt Last-Weg-Diagramme bei Gas-Einwirkung im unterirdischen Lager.

Diagramm 63 zeigt ein Last-Weg-Diagramm bei einem feststeckenden Kolben.

Diagramm 64 zeigt Last-Weg-Diagramm bei einem Leck durch ein stehendes Ventil.

Ein Diagramm 65 zeigt ein Last-Weg-Diagramm bei einem Leck durch ein bewegtes Ventil.

Von der Analysevorrichtung 140 kann aus derartigen Last-Weg-Diagrammen die Betriebseigenschaft der Pumpe 1 bestimmt werden.

Dazu ist es vorgesehen, dass der Analysevorrichtung 140 in einem Trainings-Modus zumindest ein Modell-Last-Weg-Diagramm mit jeweiligen Modell-Kurvenpunkten bereitgestellt wird.

Das Modell-Last-Weg-Diagramm wird dann auf eine vordefinierte Bezugsgröße normiert, indem die Wertebereiche angepasst und vereinheitlicht werden.

Zumindest zwei Teilmengen der Modell-Kurvenpunkte werden dann auf Basis maschinellen Lernens als ein erstes und zumindest ein zweites Merkmal erfasst.

Ein Merkmal kann beispielweise ein spezifischer Kurvenverlauf oder die Lage von Kurvenpunkten im Last-Weg-Diagramm, Abstände oder auch Abstandsänderungen zwischen einzelnen Kurvenpunkten im Last-Weg-Diagramm sein.

Durch Anwendung von maschinellem Lernen und daraus erzeugten Modellen, welche aus einer Menge von einzelnen Last-Weg-Diagrammen gebildet wird, kann die statistische Relevanz solcher Merkmale eine besonders hohe Aussagekraft erreichen.

Das erste und das zumindest eine zweite Merkmal wird dazu verwendet, um mithilfe einem Kmeans-Algorithmus zumindest eine Random-Forest-Modell zu erzeugen und zu trainieren.

Die Analysevorrichtung 140 normiert in einem Betriebs-Modus die Betriebs-Kurvenpunkte auf die Bezugsgröße.

Dann prüft die Analysevorrichtung 140, ob eine Ähnlichkeit zumindest einer Teilmenge der Betriebs-Kurvenpunkte zu dem zumindest einen Random-Forest-Modell vorliegt.

Falls zutreffend, wird die Betriebseigenschaft der Pumpe 1 daraus bestimmt.

Optional können zumindest zwei Random-Forest-Modelle gebildet werden, welche zueinander eine niedrige Korrelation aufweisen.

Dabei können die zumindest zwei Random-Forest-Modelle mit niedriger Korrelation dadurch erzeugt werden, indem jeweils ein Punkt aus der Menge der Betriebs-Kurvenpunkte zufällig ausgewählt wird und mit Ersetzen aus der Menge der Betriebs-Kurvenpunkte erfolgt.

Alternativ dazu können die zumindest zwei Random-Forest-Modelle mit niedriger Korrelation dadurch erzeugt werden, dass eine Teilmenge beim Auftrennen eines Knotens in einem Random-Forest-Modell weiter berücksichtigt wird.
Als weitere Verbesserung kann eine Abfolge des ersten und des zumindest einen zweiten Merkmals innerhalb eines Pumpzyklus im Betrieb der Pumpe 1 im jeweiligen Random-Forest-Modell bei der Bestimmung der Betriebseigenschaft der Pumpe 1 berücksichtigt werden.

Fig. 7 zeigt ein Beispiel für eine zeitliche Darstellung eines Leistungsverlaufs eines elektrischen Antriebsmotors für eine Gestänge-Tiefpumpe, welche aus der Stromaufnahme und Betriebsspannung des Motors 3 ermittelt wurde.

Die Darstellung weist eine Zeitachse 70 und eine Achse 71 für Amplitude der Strom- bzw. Leistungsaufnahme auf.

Es ist eine Leistungsaufnahme 72 gezeigt, für welche ein Nullpunkt bzw. Nullachse 80, sowie ein Polynom für gemittelte Leistungsaufnahme 81 bestimmt werden kann.

Für das Polynom 80 können ein Maximalwert der gemittelten Leistungsaufnahme 82, sowie Nulldurchgänge der gemittelten Leistungsaufnahme 83, 84 ermittelt werden.

Ferner kann für das Polynom 80 eine Periodendauer 85 der gemittelten Leistungsaufnahme bestimmt werden.

Daraus kann ein Phasenwinkel 86 der gemittelten Leistungsaufnahme ermittelt werden, welcher den Zusammenhang zwischen der Drehbewegung des Motors 3 und dem Gestänge 10 der Pumpe 1 beschreibt.

Aus der ermittelten Werten kann ein entsprechendes Last-Weg-Diagramm ermittelt werden, um daraus auf einfache Weise die Betriebseigenschaften der Gestänge-Tiefpumpe 1 abzuleiten.

Es ist erkennbar, dass der Absolutwert der Periodendauer 85 in der weiteren Berechnung des Last-Weg-Diagramms nicht berücksichtigt werden muss.

Mit anderen Worten ist es für die Bestimmung der Leistungsaufnahme nicht notwendig, dass die Antriebsfrequenz des Pumpenmotors berücksichtigt wird.

Die gewünschten Betriebseigenschaften der Gestänge-Tiefpumpe 1 können durch ein oder mehrere entsprechende Last-Weg-Diagramme im Sinne von "Soll-Werten" festgelegt werden, welche in einen Trainings-Modus als, auf maschinellem Lernen beruhenden Modell erzeugt und trainiert werden. Dabei kann auch auf Last-Weg-Diagramme anderer Pumpen zurückgegriffen werden.

Beispielsweise kann eine Frage nach dem Gasgehalt in einem Öl-Wasser-Gas-Gemisch einer Förderstätte beantwortet werden, indem ein Trainingsmodell für ein bekanntes Gemisch erstellt und trainiert wird.

Für verschiedene Fragestellung hinsichtlich des Zustands der Pumpe und deren Komponenten, sowie der Zusammensetzung des Förder-Gemischs können unterschiedliche Trainings-Modelle erzeugt werden.

Dieses Trainings-Modell dient als Referenz zu einem Betriebs-Last-Weg-Diagramm.

Abweichungen des Betriebs-Last-Weg-Diagramm vom Trainings-Modell können als unerwünschte Betriebseigenschaft erkannt werden.

In einem Trainings-Modus wird ein Last-Weg-Diagramm-Modell mit Modell-Kurvenpunkten auf Basis maschinellen Lernens von der Analysevorrichtung 140 erzeugt und trainiert.

Optional kann eine Referenzpunkt-Prüfung durch folgende Schritte durchgeführt werden:
Im Last-Weg-Diagramm-Modell können dann zumindest zwei vordefinierte Analyse-Bereiche, welche die Modell-Kurvenpunkte zumindest teilweise umfassen, bestimmt werden.

Aus den Modell-Kurvenpunkten kann dann für zumindest einen Bereich der Analyse-Bereiche ein Referenzpunkt ermittelt werden, welcher beispielsweise dem geometrischen Schwerpunkt der Kurvenpunkte des jeweiligen Bereichs beziehungsweise durch die Kurvenpunkte und die Bereichsgrenzen, beispielsweise die Diagramm-Achsen, gebildeten Fläche entspricht.

In einem Betriebs-Modus kann für das Betriebs-Last-Weg-Diagramm von der Analysevorrichtung 140 geprüft werden, ob innerhalb der durch die Betriebs-Kurvenpunkte eingeschlossenen Fläche der zumindest eine, im Trainings-Modus bestimmte Referenzpunkt eingeschlossen ist.

Falls dies zutrifft, kann die Betriebseigenschaft der Förder-Pumpe 1 aus dem als "eingeschlossen" erkannten Referenzpunkt bestimmt werden.

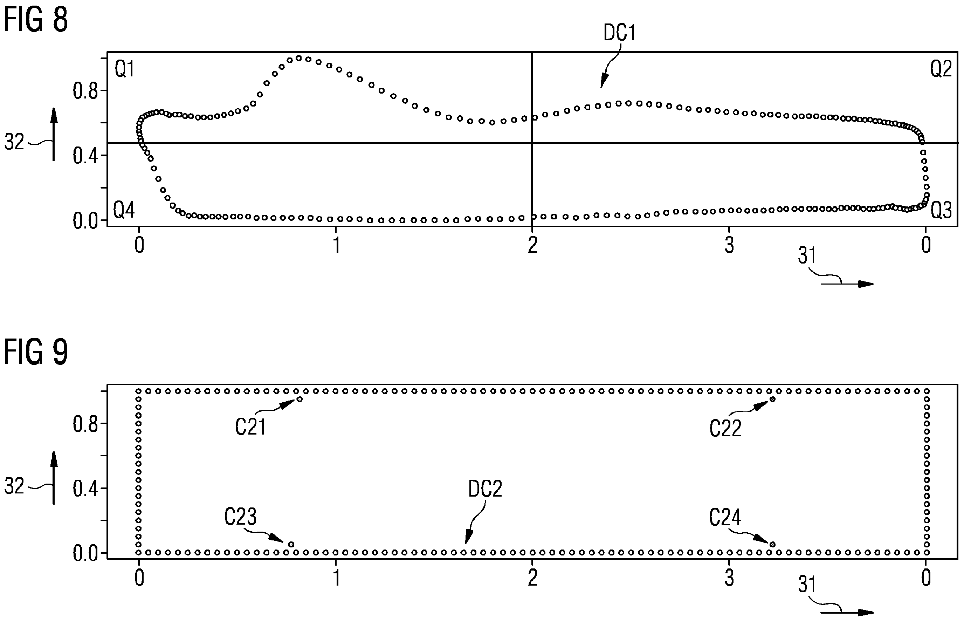

Fig. 8 zeigt ein Beispiel für ein Betriebs-Last-Weg-Diagramm DC1 mit Kurvenpunkten.

Es sind vier Bereiche Q1-Q2 in Form von Quadranten gezeigt, welche durch einen Wert 2 für den Weg 31 und einen Wert 0.5 für die Last 32 getrennt sind.

Die Bereiche können beispielsweise unmittelbar aneinander angrenzen, sodass keine Bereiche mit darin eingeschlossenen Kurvenpunkten ohne Zuordnung zu Referenzpunkten entstehen.

Falls gewünscht, können jedoch Bereiche auch ausgeschlossen werden, um beispielsweise zu verhindern, dass Bereiche mit häufig fehleranfälligen Kurvenpunkten gezielt ausgeschlossen werden, um eine Verbesserung der Stabilität bei der Bestimmung der Betriebseigenschaft der Pumpe zu erreichen.

Bereichsgrenzen können beispielsweise auch überlappen, sodass ein Kurvenpunkt mehreren Bereichen zugeordnet werden kann.

Die Mess-Kurvenpunkte und die Modell-Kurvenpunkte zwischen zwei benachbarten Punkten auf den jeweiligen Kurven können jeweils Abstände aufweisen, welche durchschnittlich zumindest 50%, bevorzugt zumindest 80% und besonders bevorzugt zumindest 95% des größten Abstands zwischen zwei benachbarten Punkten der jeweiligen Kurve beträgt.

Daraus können sich annähernd gleiche Abstände zwischen Mess-Kurvenpunkten ergeben.

Fig. 9 zeigt ein Beispiel für ein Betriebs-Last-Weg-Diagramm DC2 mit Kurvenpunkten.

Es ist für vier Bereiche, analog zur vorhergehenden Figur, jeweils ein Centroiden-Punkt C21-C24 eingezeichnet, welcher dem geometrischen Schwerpunkt der Kurvenpunkte des jeweiligen Bereichs beziehungsweise durch die Kurvenpunkte und die Bereichsgrenzen, beispielsweise die Diagramm-Achsen, gebildeten Fläche entspricht.

Es kann vorteilhaft sein, wenn sich die Bereiche zumindest teilweise gegenseitig überlappen, um einen Referenzpunkt des Bereichs besser zu definieren, falls beispielsweise in einem Bereich zu wenige Kurven-Punkte enthalten sind.

Ferner kann beispielsweise zumindest ein Bereich definiert werden, für welchen vorgesehen ist, dass kein eingeschlossener Kurvenpunkt bei der nachfolgenden Prüfung berücksichtigt wird.

Mit anderen Worten kann ein Bereich von der näheren Betrachtung ausgeschlossen werden.

Die kann vorteilhaft sein, wenn beispielsweise ein Bereich als besonders störanfällig bekannt ist und/oder für bestimmte Aussagen hinsichtlich der Betriebseigenschaften nicht oder nur wenig relevant ist.

Bei Anwendung des erfindungsgemäßen Verfahrens kann es beispielsweise auch vorgesehen sein, mehrere, voneinander unabhängige Prüfungen von Betriebseigenschaften sequenziell oder parallel durchzuführen.

Es ist vorteilhaft, wenn nach einer Ähnlichkeitsprüfung mittels einem oder mehrerer Kmeans-Entscheidungsbäume eine zusätzliche Centroiden-Prüfung gemäß den vorhergehenden Ausführungen durchgeführt wird.

Durch eine Centroiden-basierte Nachbearbeitung ("post processing") kann die Erkennung von Betriebseigenschaften besonders zielsicher erfolgen und die Erkennungsrate bei der Bestimmung der Betriebseigenschaft weiter verbessert werden.

Natürlich kann auch eine iterative Prüfung durch Anwendung des erfindungsgemäßen Verfahrens vorgesehen sein, um bestimmte Verdachtsmomente hinsichtlich einer vermuteten Betriebseigenschaft schrittweise zu erhärten, indem die Kriterien hinsichtlich der Trainings-Modells angepasst werden.

Dabei können beispielsweise sukzessive die Genauigkeitsanforderungen durch eine Erhöhung von Referenzpunkten im jeweils nachfolgenden Trainings-Modell erhöht werden, oder auch alternative Referenzpunkte untersucht werden, um beispielweise mittels einer Kombination von zwei unterschiedlichen Trainings-Modellen weitere Schlüsse für die zu untersuchende Betriebseigenschaft zu ziehen.

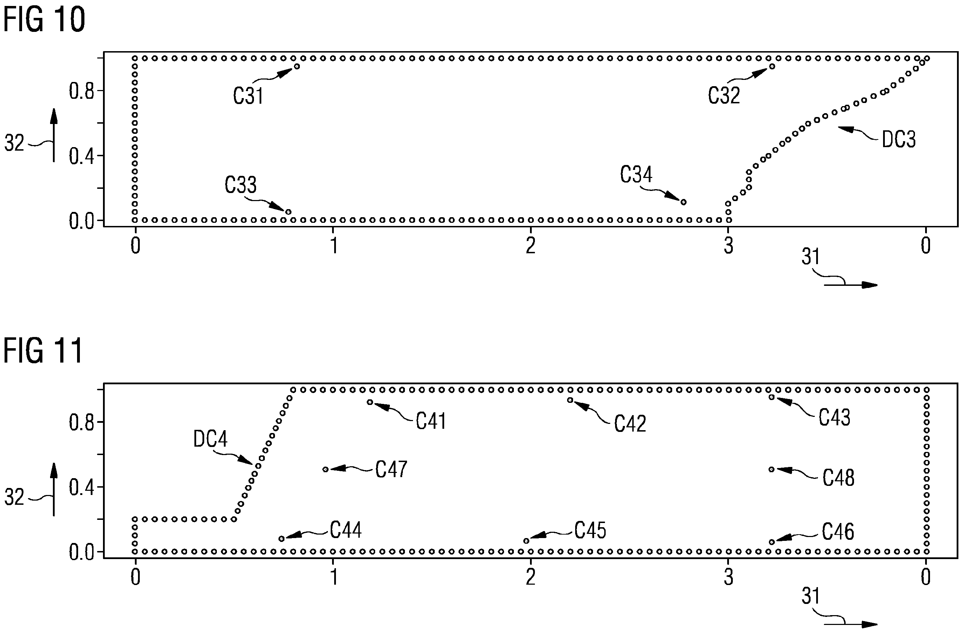

Fig. 10 zeigt ein Beispiel für ein Betriebs-Last-Weg-Diagramm DC3 mit Kurvenpunkten.

Es ist für vier Bereiche, analog zur vorhergehenden Figur, jeweils ein Centroiden-Punkt C31-C34 eingezeichnet, welcher dem geometrischen Schwerpunkt der Kurvenpunkte des jeweiligen Bereichs entspricht.

Fig. 11 zeigt ein Beispiel für ein Betriebs-Last-Weg-Diagramm DC4 mit Kurvenpunkten.

In diesem Beispiel sind acht Bereiche gezeigt, welche durch einen Wert 2 für den Weg 31 und einen Wert größer oder kleiner als 0.5 für die Last 32 getrennt sind, wobei für den Wert 0.5 auf der Last-Achse 32 zwei weitere Bereiche vorgesehen sind.

Es ist für die acht Bereiche jeweils ein Centroiden-Punkt C41-C48 eingezeichnet, welcher dem geometrischen Schwerpunkt der Kurvenpunkte des jeweiligen Bereichs entspricht.

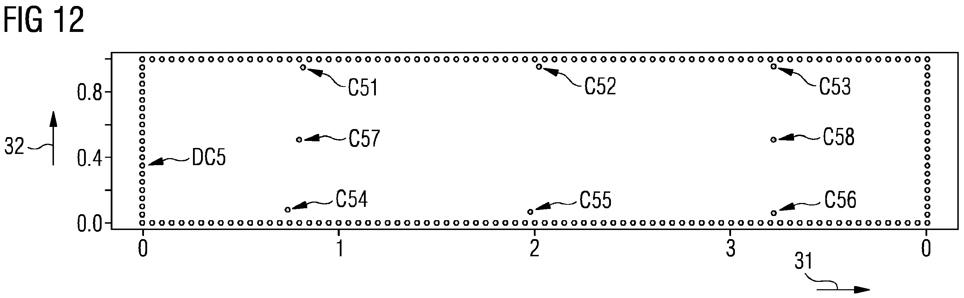

Fig. 12 zeigt ein Beispiel für ein Betriebs-Last-Weg-Diagramm DC5 mit Kurvenpunkten.

Es ist für acht Bereiche, analog zur vorhergehenden Figur, jeweils ein Centroiden-Punkt C51-C58 eingezeichnet, welcher dem geometrischen Schwerpunkt der Kurvenpunkte des jeweiligen Bereichs entspricht.

### Bezugszeichen:

- 1: Gestänge-Tiefpumpe
- 2: Laufbalken
- 3: Antriebsmaschine, Motor
- 4: Untersetzungsgetriebe
- 5: polierte Stange
- 6: Bohrlochkopf
- 7: Durchflussleitung
- 8: Mantel
- 9: Röhre
- 10: Stabschnur
- 11: Kolben
- 12: Lauf
- 13: Bohrloch
- 14: Fördermedium
- 15: Deckröhre mit vertikalen Rillen
- 16, 25: Haltevorrichtung
- 17: selbstausrichtendes Lager
- 18: drehende Röhre mit Spiralrillen
- 19: Aufnahmeröhre
- 20: Flügelmutter
- 21: Kolbenanordnung
- 22: Pumpenauskleidung
- 23: kalibrierte Stange
- 24: Stift
- 30: Last-Weg-Diagramm
- 31: Position der polierten Stange
- 32: Last der polierten Stange
- 33: Tiefster Punkt des Pumpenhubs
- 34: Höchster Punkt des Pumpenhubs
- 35: Spitze der polierten Stange, PPRI
- 36: Karte der polierten Stange für Pumpgeschwindigkeit gleich Null
- 37: Karte der polierten Stange für Pumpgeschwindigkeit größer als Null
- 38: Minimale Last der polierten Stange, MPRL
- 39: Bruttokolbenlast
- 40: Gewicht der Stangen im Fluid
- 41, 42: Kraft
- 43: Weg
- 50: Last-Weg-Diagramm mit Stangenlast bei Sollwert
- 51: Pumpe, volle Leistung
- 52: leergepumpt
- 53: Sollwert
- 54: Last-Weg-Diagramm mit Stangenlast beim Betriebswechsel
- 55, 56: Winkel
- 57: Last-Weg-Diagramm mit mechanischer Arbeit der Stangen
- 60: Last-Weg-Diagramm im normalen Betrieb
- 61: Last-Weg-Diagramm bei einem Fluid-Lager
- 62: Last-Weg-Diagramm bei Gas-Einwirkung
- 63: Last-Weg-Diagramm bei feststeckendem Kolben
- 64: Last-Weg-Diagramm bei einem Leck durch ein stehendes Ventil
- 65: Last-Weg-Diagramm bei einem Leck durch ein bewegtes Ventil
- 70: Zeitachse
- 71: Achse für Amplitude der Strom- bzw. Leistungsaufnahme
- 72: Leistungsaufnahme
- 80: gewählter Nullpunkt bzw. Nullachse
- 81: Polynom für gemittelte Leistungsaufnahme
- 82: Maximalwert der gemittelten Leistungsaufnahme
- 83, 84: Nulldurchgang der gemittelten Leistungsaufnahme
- 85: Periodendauer der gemittelten Leistungsaufnahme
- 86: ermittelter Phasenwinkel der gemittelten Leistungsaufnahme
- 100: Pumpsystem
- 110, 111: Pumpkopf
- 120: Kinematik-Wandler
- 130: Erfassungsmittel, Erfassungsvorrichtung
- 140: Rechenvorrichtung, Analysevorrichtung
- 150: Speicher
- Q1-Q4: Bereich, Quadrant
- C21-C24, C31-C36, C41-C48 C51-C58: geometrischer Schwerpunkt, Centroid
- DC1-DC5: Last-Weg-Diagramm, Dynacard

## Patentansprüche

1. Computer-implementiertes Verfahren zur Bestimmung einer Betriebseigenschaft einer Gestänge-Tiefpumpe (1), wobei die Pumpe (1) einen Pump-Kopf (110, 111) aufweist, welcher über ein Gestänge (5, 10) mit einem Kinematik-Wandler (120) verbunden ist, und der Kinematik-Wandler (120) im Betrieb von einem Motor (3) angetrieben wird und ein Last-Weg-Diagramm mit Kurvenpunkten für die Pumpe (1) mithilfe eines Erfassungsmittels (130) von einer Analysevorrichtung (140) ermittelt und als Betriebs-Last-Weg-Diagramm (DC1-DC5) mit Betriebs-Kurvenpunkten bereitgestellt wird,
**dadurch gekennzeichnet, dass** von der Analysevorrichtung (140) in einem Trainings-Modus zumindest ein Modell-Last-Weg-Diagramm mit jeweiligen Modell-Kurvenpunkten bereitgestellt wird, welches auf eine vordefinierte Bezugsgröße normiert wird, und zumindest zwei Teilmengen der Modell-Kurvenpunkte auf Basis maschinellen Lernens als ein erstes und zumindest ein zweites Merkmal erfasst werden, und das erste und das zumindest eine zweite Merkmal in Form zumindest eines Random-Forest-Modells mit einem Kmeans-Algorithmus erzeugt und trainiert wird,
und in einem Betriebs-Modus die Betriebs-Kurvenpunkte auf die Bezugsgröße normiert werden und geprüft wird, ob eine Ähnlichkeit zumindest einer Teilmenge der Betriebs-Kurvenpunkte zu dem zumindest einen Random-Forest-Modell vorliegt, und falls zutreffend, die Betriebseigenschaft der Pumpe (1) daraus bestimmt wird.

2. Verfahren nach dem vorhergehenden Anspruch,
wobei zumindest zwei Random-Forest-Modelle gebildet werden, welche zueinander eine niedrige Korrelation aufweisen.

3. Verfahren nach Anspruch 2,
wobei die zumindest zwei Random-Forest-Modelle mit niedriger Korrelation dadurch erzeugt werden, dass jeweils ein Punkt aus der Menge der Betriebs-Kurvenpunkte zufällig ausgewählt wird und mit Ersetzen aus der Menge der Betriebs-Kurvenpunkte erfolgt.

4. Verfahren nach Anspruch 2,
wobei die zumindest zwei Random-Forest-Modelle mit niedriger Korrelation dadurch erzeugt werden, dass eine Teilmenge beim Auftrennen eines Knotens in einem Random-Forest-Modell weiter berücksichtigt wird.

5. Verfahren nach einem der Ansprüche 2 bis 4,
wobei eine Abfolge des ersten und des zumindest einen zweiten Merkmals innerhalb eines Pumpzyklus im Betrieb der Pumpe (1) im jeweiligen Random-Forest-Modell bei der Bestimmung der Betriebseigenschaft der Pumpe (1) berücksichtigt wird.

6. Verfahren nach einem der vorhergehenden Ansprüche,
wobei das erste oder das zumindest eine zweite Merkmal einen Abstand von Betriebs-Kurvenpunkten im Betriebs-Last-Weg-Diagramm (DC1-DC5) umfasst.

7. Verfahren nach einem der vorhergehenden Ansprüche,
wobei der Motor (3) elektrisch betrieben wird und das Erfassungsmittel (130) dazu eingerichtet ist, die elektrische Leistungsaufnahme des Motors (3) während dessen Betrieb zu erfassen, aus welcher die Betriebseigenschaften der Pumpe (1) bestimmt werden.

8. Computerprogramm,
umfassend Befehle, welche bei deren Ausführung durch einen Computer diesen veranlassen, das Verfahren nach einem der vorhergehenden Ansprüche auszuführen.

9. Elektronisch lesbarer Datenträger mit darauf gespeicherten lesbaren Steuerinformationen, welche zumindest ein Computerprogramm nach dem vorhergehenden Anspruch umfassen und derart ausgestaltet sind, dass sie bei Verwendung des Datenträgers in einer Recheneinrichtung ein Verfahren nach einem der Ansprüche 1 bis 7 durchführen.

10. Datenträgersignal, welches das Computerprogramm nach Anspruch 8 überträgt.

11. Analysevorrichtung (140) mit einem Speicher (150) zur Bestimmung einer Betriebseigenschaft einer Gestänge-Tiefpumpe (1),
welche dazu eingerichtet ist, ein bereitgestelltes Betriebs-Last-Weg-Diagramm (DC1-DC5) mit dem Verfahren nach einem der Ansprüche 1 bis 7 zu analysieren, und daraus die Betriebseigenschaft zu ermitteln.

12. Pumpsystem (100) zur Bestimmung einer Betriebseigenschaft einer Gestänge-Tiefpumpe (1),
wobei die Pumpe (1) einen Pump-Kopf (110, 111) aufweist, welcher über ein Gestänge (5, 10) mit einem Kinematik-Wandler (120) verbunden ist, und der Kinematik-Wandler (120) im Betrieb von einem Motor (3) angetrieben wird, und ein Erfassungsmittel (130), welches dazu eingerichtet ist, ein Last-Weg-Diagramm der Pumpe (1) mit Kurvenpunkten zu erfassen und bereitzustellen, sowie eine Analysevorrichtung (140) mit einem Speicher (150) nach dem vorhergehenden Anspruch, welche dazu eingerichtet ist, aus dem bereitgestellten Betriebs-Last-Weg-Diagramm (DC1-DC5) die Betriebseigenschaft zu ermitteln.
